(19) Europäisches Patentamt
European Patent Office
Office européen des brevets

(11) Publication number: **0 199 402 B1**

(12) **EUROPEAN PATENT SPECIFICATION**

(45) Date of publication of patent specification: **27.09.89**

(51) Int. Cl.⁴: **B 21 B 15/00,** B 21 B 39/16

(21) Application number: **86200573.3**

(22) Date of filing: **04.04.86**

(54) **Device for separating rolled stock.**

(30) Priority: **22.04.85 IT 8335985**

(43) Date of publication of application:
**29.10.86 Bulletin 86/44**

(45) Publication of the grant of the patent:
**27.09.89 Bulletin 89/39**

(84) Designated Contracting States:
**AT BE CH DE FR GB LI LU NL SE**

(58) References cited:
**EP-A-0 013 671**
**FR-A-1 531 186**
**FR-A-2 351 746**
**GB-A-1 092 796**
**US-A-1 881 020**
**US-A-2 191 148**
**US-A-3 731 512**
**US-A-4 357 819**

**PATENTS ABSTRACTS OF JAPAN, vol. 8, no. 270 (M-344)1707r, 11th December 1984; & JP-A-59 141 306 (SHIN NIPPON SEITETSU K.K.) 14-08-1984**

(73) Proprietor: **DANIELI & C. OFFICINE MECCANICHE S.p.A.**
**Via Nazionale, 19**
**I-33042 Buttrio (UD) (IT)**

(72) Inventor: **Piccotti, Claudio**
**Via Abetti 14**
**I-34170 Gorizia (IT)**

(74) Representative: **Petraz, Gilberto Luigi**
**G.L.P. S.a.s. di Gilberto Petraz P.le Cavedalis 6/2**
**I-33100 Udine (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 199 402 B1

## Description

This invention concerns a device for separating rolled stock, the device being of a type which can be employed in hot rolling lines.

A device of this kind is known from document FR—A—2,351,746.

The device for separating rolled stock is applied immediately downstream of a pair of rolling rolls.

The splitting of the rolled stock into two portions sliding parallel to each other is performed by specially shaped rolls.

The invention provides for an improved regulation of such rolls and for improved means to guide the departing rolled stock.

Methods for splitting the rolled stock in which static blades are employed are known. Such blades entail the drawback of becoming easily and readily worn; moreover, the action of splitting the rolled stock is not as progressive as it is when the blades are rotating.

Embodiments are also known which employ specially shaped rolls, that is to say, a pair of specially shaped rolls to split the rolled stock.

Some known systems, in carrying out the splitting of rolled stock of differing dimensions, provide for the whole separation device to be replaced or for the set of shaped rolls to be replaced, the distance between centres of such rolls being unchangeable.

Other embodiments provide for separate adjustment of the two shaped rolls, for instance by means of independent screws or like means for the two blades.

Document US—A—1,881,020 discloses a device for separating rolled stock which functions very like that of the invention in question. This US document provides blades 10 which cooperate with conditioning rolls 14. Such a system cannot be employed in modern rolling processes.

Document US—A—2,191,148 discloses a system for multiple duplication, starting with a flat rolled product, but this system can be used only where cold processing is to be employed.

Document FR—A—2.351.746 dislcoses a device for separating rolled stock which can be likened to that of the present invention but which entails a plurality of limitations.

In fact, the rolls are here supported on both sides of the frame, and the access to these rolls for purposes of replacement or maintenance is difficult and may involve the device to be dismantled.

Furthermore, the device has no means for regulating the distance between the axes of the rolls.

Document FR—A—1.531.586 discloses a device for longitudinally separating blooms during a casting process.

This device comprises two pairs of rolls couples for cutting the metal strip joining two adjacent blooms and polishing the blooms edge surfaces.

Document GB—A—1.092.796 discloses an edge-trimming shearing machine suitable for cutting the edges of metal sheets.

Said machine is provided with shearing rolls whose axial distance can be regulated, for suiting the thickness of the metal sheet, by means of a worm screw mechanism.

Devices of known types, therefore, entail adjustment problems and also problems related to generally complex construction. Furthermore, the replacement of worn blades is not undertaken at once as part of the device has to be dismantled to perform such replacement.

This invention purposes to overcome the problem of regulation of the distance between centres of shaped rolls that split the rolled stock.

The invention purposes also to fit the rolls cantileverwise so as to simplify replacement and maintenance as much as possible.

This is obtained by a device of the mentioned type, and having the features disclosed in the characterising part of claim 1.

The dependent claims disclose advantageous forms of embodiment of the invention.

The invention provides for regulation means which consist of one single worm screw acting simultaneously on two eccentric bushes respectively of one and the other shaped blade-rolls.

By means of their rotation, which is actuated, as we said above, by the worm screw, the eccentric bushes actuate the reciprocal displacement of the shaped blade-rolls. In this way the rolling axis is kept unchanged.

This enables the distance between centres of the shaped rolls that split the rolled stock, to be set simply and at once.

Actuation of such setting is obtained preferably by means of a shank equipped with a clamping fork.

Maintenance and replacement of the shaped blade-rolls are considerably simplified since such blade-rolls, as we said earlier, are fitted as cantilevers. To replace the blade-rolls it is therefore enough to slacken the fixture means, for instance a nut, of the blade-rolls rotating on its relative axis.

So as to enable the eccentric bushes to be accurately positioned and any play to be taken up automatically, thus obviating the risk of undesired twisting of the blades and of oscillations and vibrations, the bushes are kept in position by preloaded springs, according to an embodiment of the invention.

In this way very tight working tolerances do not have to be used and a firm, stable positioning of the eccentric bushes is obtained.

Such bushes are contained in a frame closed with a cover that has the function also of preloading the springs. Such springs are preferably and advantageously Belleville washers.

According to another embodiment of the invention a pair of outlet guide rolls is provided, which are staggered in relation to each other and have the task of absorbing a part of the splitting stress and of guiding the rolled sections downstream of the splitting area.

The inlet guides of the device, the shaped splitting rolls and the staggered outlet rolls are cooled with jets of a liquid in a conventional manner.

We shall describe hereinafter, as a non-restrictive example, a preferred embodiment of the invention with the help of the attached figures, in which:—

Fig. 1 is a side view of a device for separating rolled stock according to the invention, the device being located immediately downstream of a pair of rolling rolls;

Fig. 2 is a plan view of the box of Fig. 1;

Fig. 3 shows a section along the line A—A of Fig. 1.

In the figures a device 10 for separating rolled stock is located immediately downstream of a pair of rolling rolls 11. The device 10 comprises a bearing frame 14, which contains a specially shaped guide 12 in its front portion. In the example shown such guide 12 is shaped like a dumbbell according to the preferred section of the rolled stock entering the device.

Frontal sprayers 13 to spray liquid for cooling the rolling rolls are shown, as also are two specially shaped blade-rolls 15 which perform the splitting of the rolled stock and of which the distance between centres can be regulated by means of eccentric bushes 17 (Fig. 3).

The bushes 17 are lodged within the frame 14, and each of them supports a shaft 22 which, by means of a suitable bearing, supports in its turn its repsective shaped roll 15 as a cantilever.

Adjustment of the distance between centres of the shaped rolls is performed by simultaneous rotation of the eccentric bushes 17. According to the preferred embodiment of the invention such rotation is actuated by one single worm screw 16, which in the example shwon is positioned obliquely to the direction of sliding of the rolled stock. In a variant, which has not been shown, the worm screw 16 can be positioned horizontally.

In the figure the worm screw 16 comprises an actuation shank 18, in correspondance with which is included a clamping fork 19 to prevent undesired displacements from the preselected position as a result of accidental actuation of the shank 18.

According to the preferred embodiment of the invention the frame 14 is closed at its rear by a cover 20, which has the task of pre-loading two Belleville washers 21 when it is closed. Each washer 21 is located in correspondence with its respective eccentric bush 17.

In this way the buses are pre-loaded and thus take up any play between the bushes 17 and the frame 14. Any accidental twisting or vibration of the rolls 15 is thus obviated.

Lubrication ducts 23 are shown which deliver lubricating fluid in a known manner to the bearings of the rolls 15.

The figure also shows a cooling liquid inlet 25 which feeds liquid to the sprayers 13.

A separator 24 is included immediately downstream of the shaped rolls 15 and has the task of guiding and separating the two rolled products obtained by splitting.

Two outlet guide rolls 26 are located downstream of the separator 24 and are shown in greater detail in Fig. 1, where the rear portion of the frame 14 has been partially cut away in correspondence with the outlet rolls 26.

These outlet rolls 26 are staggered so as to make possible a not excessive separation of the two rolled products obtained. Such outlet rolls 26 absorb a part of the stress of splitting the rolled product and thus prevent premature wear and replacement of the shaped splitting rolls 15; the outlet rolls 26 too are provided with lubrication through ducts 23 and are cooled with jets of water, the feed system of the water being referenced with 25.

As can be seen in the figures, the invention makes possible a ready and easy access to the shaped rolls 15 and an easy replacement of the same, such rolls 15 being fitted as cantilevers.

The invention also enables the eccentric bushes 17 to be maintained easily and, as is shown in the figures, simplifies the actuation of the regulation, since it is enough to act on the shank 18 so as to adjust the distance between centres of the shaped rolls 15 while keeping the rolling axis constant.

Thus the setting of the device 10 of the invention presents no difficulty and can be actuated at once.

We have described here a preferred embodiment of the invention, but variants are possible without departing thereby from the scope of the claims.

Thus the shapes and sizes of the parts can be modified, and blades or rollers 15 shaped otherwise than as shown can be employed. An actuation means 18 different from the shank illustrated can be adopted, as also can safety means other than the clamping fork 19; it is possible to employ springs of a type different from the Belleville washers 21. These and other variants are all possible without departing thereby from the scope of the invention as claimed.

**Claims**

1. Device (10) separating rolled stock comprising a frame (14), a pair of blade-rolls (15) supported on said frame (14) and an inlet guide (12) disposable close to the outlet of a rolling stand, characterised in that the device further comprises means (16—18) for regulating the distance between the axes of said blade-rolls (15), said means (16—18) being operated by one single actuator regulating both blade-rolls (15) at one and the same time, said means (16—18) comprising two eccentric bushes (17), each cooperating rotatably with said frame and being actuated by a worm screw (16) disposed between said two bushes (17) and rigidly supporting a shaft (22) of each of said blade-rolls (15) at one end thereof.

2. Device (10) as claimed in claim 1, characterised in that said worm screw (16) has its axis tilted in relation to the rolling axis.

3. Device (10) as claimed in claim 1, characterised in that said worm screw (16) has its axis parallel to the rolling axis.

4. Device (10) as claimed in anyone of the preceding claims, characterised in that said worm screw (16) comrpises an actuation shank (18).

5. Device (10) as claimed in anyone of the preceding claims, characterised in that it comprises safety means (19) to clamp the regulation system.

6. Device (10) as claimed in anyone of the preceding claims, characterised in that it comprises a pair of outlet guide rolls (26) staggered in relation to each other downstream of said blade rolls (15).

7. Device (10) as claimed in anyone of the preceding claims, characterised in that said bushes (17) continuously cooperate with preloaded springs (21) for preventing any twisting or vibration of said blade-rolls (15).

8. Device (10) as claimed in claim 7, characterised in that it comprises a cover (20) for preloading said springs (21).

9. Device (10) as claimed in anyone of claims 7 and 8, characterised in that said springs (21) comprise Belleville washers.

**Patentansprüche**

1. Vorrichtung (10) zum Trennen von gewalztem Gut, mit einem Rahmen (14), mit einem Paar auf dem Rahmen (14) abgestützter Messerwalzen (15) und mit einer Zulaufführung (12), welche nahe dem Auslauf eines Walzgerüstes angeordnet werden kann, dadurch gekennzeichnet, daß die Vorrichtung auch Mittel (16—18) zum Einstellen des Abstandes Zwischen den Achsen der Messerwalzen (15) aufweist, wobei diese Mittel (16—18) mittels eines einzigen, beide Messerwalzen (15) gleichzeitig einstellenden Antriebes betätigt werden und die Mittel (16—18) aus zwei Exzenterbuchsen (17) bestehen, von denen jede drehbar mit dem Rahemn zusammenwirkt und mittels einer zwischen den zwei Buchsen (17) angebrachten Schnecke (16) betätigt wird und eine Welle (22) jeder Messerwalze (15) an deren einem Ende starr trägt.

2. Vorrichtung (10) nach Anspruch 1, dadurch gekennzeichnet, daß die Achse der Schnecke (16) in bezug auf die Walzachse geneigt ist.

3. Vorrichtung (10) nach Anspruch 1, dadurch gekennzeichnet, daß die Achse der Schnecke (16) parallel zu der Walzachse verläuft.

4. Vorrichtung (10) nach irgendeinem der vorhergehenden Ansprüche, dadurch gekennzeichnet, daß die Schnecke (16) einen Betätigungsschaft (18) aufweist.

5. Vorrichtung (10) nach irgendeinem der vorhergehenden Ansprüche, dadurch gekennzeichnet, daß sie Sicherheitsmittel (19) zum Festklemmen des Einstellsystems aufweist.

6. Vorrichtung (10) nach irgendeinem der vorhergehenden Ansprüche, dadurch gekennzeichnet, daß die ein Paar Auslaufführungswalzen (26) aufweist, die stromab von den Messerwalzen (15) gelegen, in bezug aufeinander gestaffelt sind.

7. Vorrichtung (10) nach irgendeinem der vorhergehenden Ansprüche, dadurch gekennzeichnet, daß die Buchsen (17) mit vorgespannten Federn (21) ständig zusammenwirken, un jedwedes Verdrehen oder Vibrieren der Messerwalzen (15) zu verhindern.

8. Vorrichtung (10) nach Anspruch 7, dadurch gekennzeichnet, daß sie eine Abdeckung (20) zum Vorspannen der Federn (21) aufweist.

9. Vorrichtung (10) nach irgendeinem der Ansprüche 7 und 8, dadurch gekennzeichnet, daß die Federn (21) aus Tellerfedern bestehen.

**Revendications**

1. Dispositif (10) pour séparer des produits laminés comprenant un châssis (14), une paire de cylindres à lames (15) supportés sur ledit châssis (14) et un guide d'entrée (12) pouvant se placer à proximité de la sortie d'un traine de laminage, caractérisé en ce que le dispositif comprend en outre un moyen (16, 18) pour régler la distance entre les axes desdits cylindres à lames (15), ledit moyen (16, 18) étant commandé avec un seul actionneur agissant sur les deux cylindres à lames (15) au même moment, ledit moyen (16, 18) comprenant deux buselures excentriques (17) coopérant chacune à rotation avec ledit châssis en étant sous la commande d'une vis sans fin (16) disposée entre les deux buselures et supportant à une extrémité un arbre (22) de chacun des cylindres à lames (15).

2. Dispositif (10) selon la revendication 1, dadurch gekennzeichnet, caractérisé en ce que ladite vis sans fin (16) présente un axe incliné par rapport à l'axe de laminage.

3. Dispositif (10) selon la revendication 1, caractérisé en ce que la vis sans fin (16) a un axe parallèle à l'axe de laminage.

4. Dispositif (10) selon l'une des revendications précédentes, caractérisé en ce que ladite vis sans fin (16) comprend une tige de commande (18).

5. Dispositif (10) selon l'une des revendications précédentes, caractérisé en ce qu'il comprend un dispositif de sécurité (19) pour bloquer le système de régulation.

6. Dispositif (10) selon l'une des revendications précédentes, caractérisé en ce qu'il comprend une paire de cylindres de guidage de sortie (26) décalés l'un par rapport à l'autre, en aval des cylindres à lames (15).

7. Dispositif (10) selon l'une des revendications précédentes, caractérisé en ce que les buselures (17) fonctionnent continuellement avec des ressorts préchargés (21) pour empêcher toute torsion ou toute vibration des cylindres à lames (15).

8. Dispositif (10) selon la revendication 7, caractérisé en ce qu'il comprend un couvercle (20) pour précharger les ressorts (21).

9. Dispositif (10) selon l'une des revendications 7 et 8, caractérisé en ce que les ressorts (21) sont constitués de rondelles Belleville.

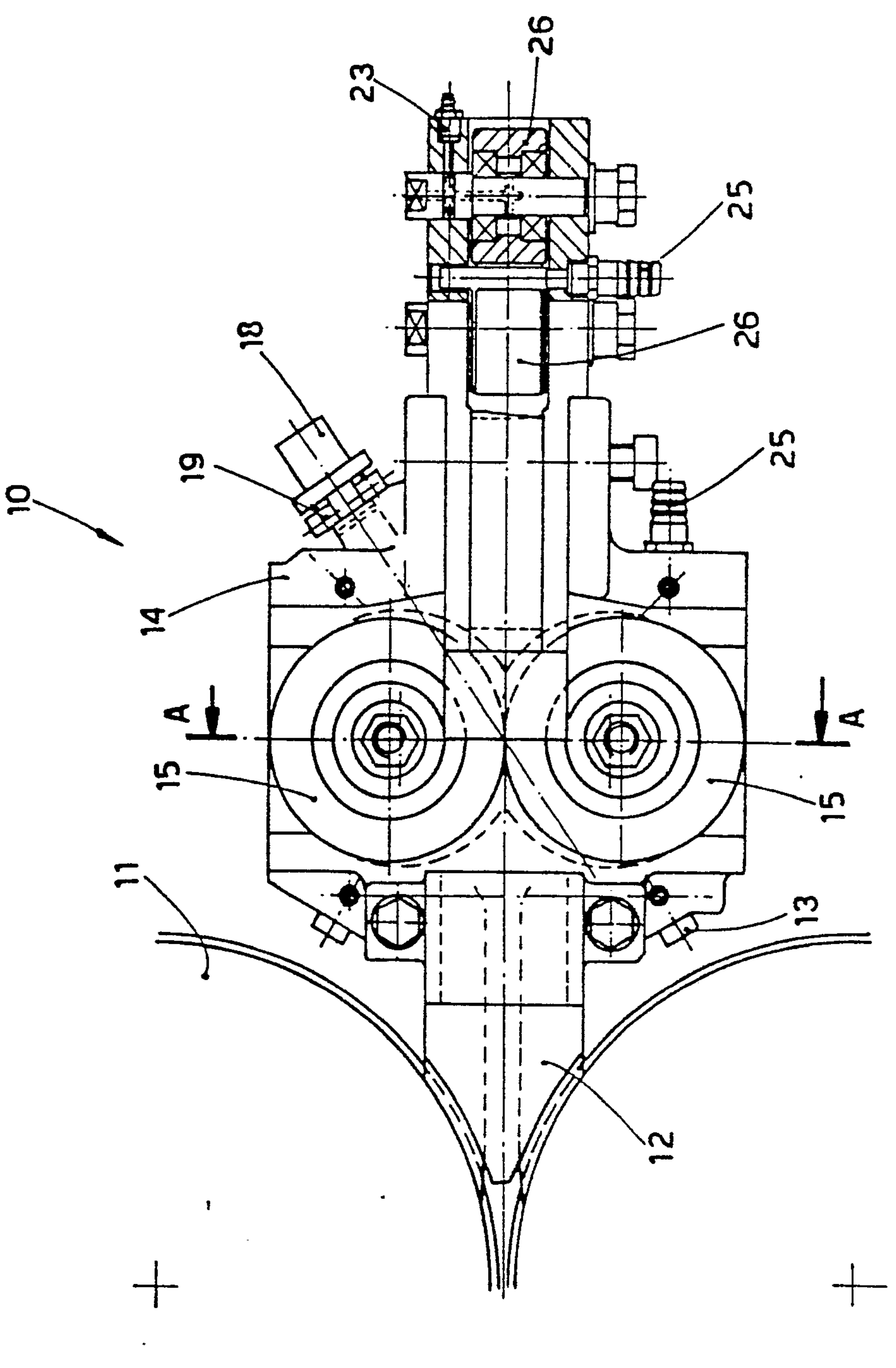


fig.1

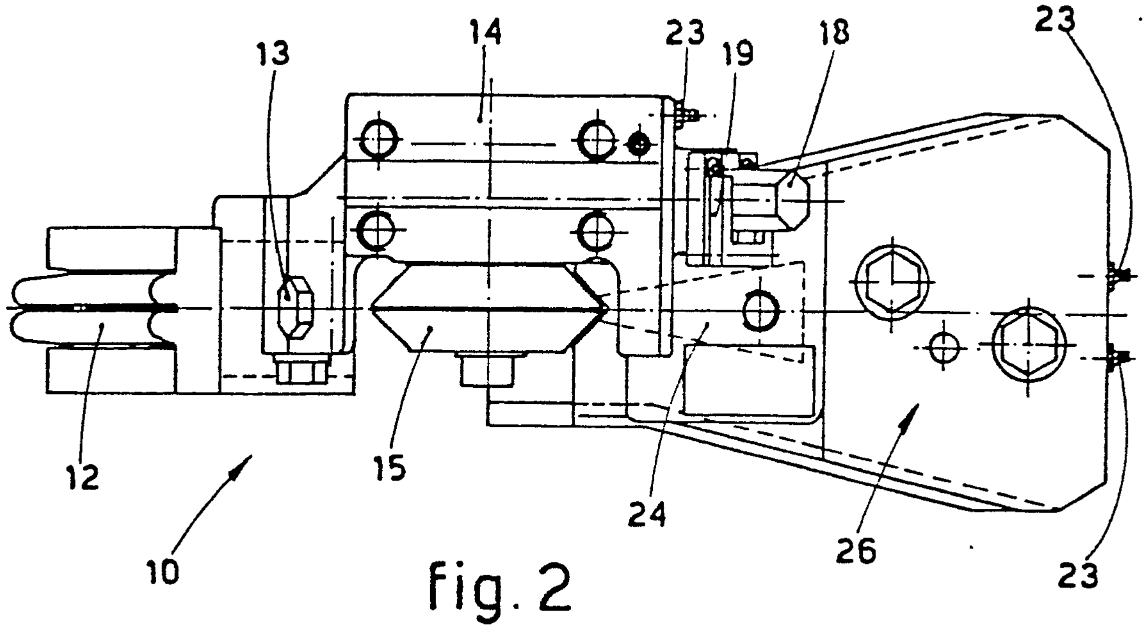


fig. 2

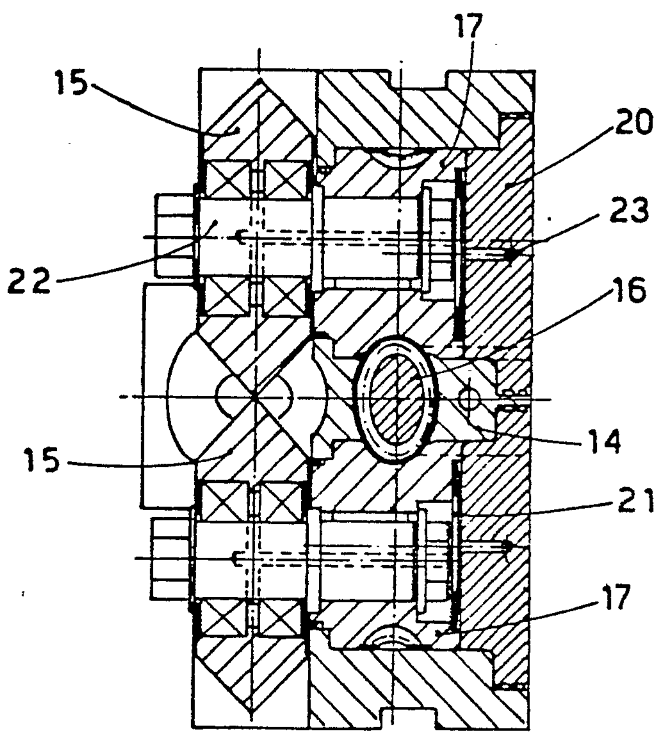


fig. 3